# EUROPEAN PATENT APPLICATION

(11) **EP 4 497 706 A1**
(43) Date of publication of application: **29.01.2025**
(21) Application number: 23803329.4
(22) Date of filing: 12.04.2023
(51) Int. Cl.: B65G 1/04

(54) **STACKER**

(30) Priority: 09.05.2022 JP 2022077032
(71) Applicant: Murata Machinery, Ltd., Kyoto-shi, Kyoto 601-8326 (JP)
(72) Inventor: SAI Jun, Ise-shi, Mie 516-0003 (JP); SAKATA Keisuke, Ise-shi, Mie 516-0003 (JP)
(74) Representative: Weickmann & Weickmann PartmbB
(86) International application number: PCT/JP2023/014902
(87) International publication number: WO 2023/218847

(57) **Abstract**

A stocker (1) includes a first stacker crane (7A) and a second stacker crane (7B) each including a mast (72) having a pair of surfaces (72a, 72b) orthogonal to a traveling direction (D) and a transfer unit (75) provided so as to be capable of being raised and lowered along one (72b) of the pair of surfaces (72a, 72b) and configured to transfer an article (A) to and from a first rack (4A) and a second rack (4B). The two cranes (7A, 7B) are disposed such that each face a direction opposite to a direction in which the one of the pair of surfaces on which the transfer unit (75) is provided so as to be capable of being raised and lowered face each other in the traveling direction (D). A first space (S1) is provided with an entry area (A3) that the two cranes (7A, 7B) mutually enter. A controller (10) controls traveling of the two cranes (7A, 7B) such that the two cranes (7A, 7B) do not collide with each other.

## Description

### Technical Field

One aspect of the invention relates to a stocker.

### Background Art

A stocker including a crane (a stacker crane) configured to transport articles and a rack in which the articles are housed is known. For example, Patent Document 1 discloses an automatic warehouse in which two stockers each including two cranes and two racks disposed so as to sandwich the cranes along a traveling direction of the two cranes are arranged in the traveling direction of the two cranes. The crane included in this stocker includes a mast extending in a vertical direction, and a transfer unit configured to transfer articles to the racks is provided so as to be capable of being raised and lowered along one of a pair of surfaces in the traveling direction constituted on the mast.

### Citation List

### Patent Literature

Patent Document 1: Japanese Unexamined Patent Publication No. 2015-9953

### Summary of Invention

### Technical Problem

In such a stocker, there is a need to increase the number of articles that can be housed in the stocker. However, in the stocker with the configuration described above in which the cranes travel inside the stocker, the mast interferes with the casing of the stocker at one end of the stocker in the traveling direction, thus creating a space in which articles cannot be transferred by either of the transfer units of the two cranes. Thus, racks cannot be provided in this space, reducing the number of articles that can be housed in the stocker.

Given these circumstances, an object of one aspect of the present invention is to provide a stocker including a crane having a transfer unit provided so as to be capable of being raised and lowered along one of the pair of surfaces of a mast orthogonal to a traveling direction, the stocker being capable of increasing the number of articles that can be housed in the stocker.

### Solution to Problem

A stocker according to one aspect of the present invention includes: two cranes configured to travel on a rail extending in one direction; racks being disposed so as to extend along and sandwich the rail, an article being placed in and removed from the racks by the two cranes; a first space constituent part constituting a first space housing the two cranes and the racks; and a controller configured to control the two cranes, each of the two cranes including a mast having a pair of surfaces orthogonal to a traveling direction of the two cranes and a transfer unit provided so as to be capable of being raised and lowered along one of the pair of surfaces and configured to transfer the article to and from the racks, the two cranes being disposed such that each faces a direction opposite to a direction in which the one of the pair of surfaces on which the transfer unit is provided so as to be capable of being raised and lowered face each other in the traveling direction, the first space being provided with an entry area that the two cranes mutually enter, and the controller controlling traveling of the two cranes such that the two cranes do not collide with each other.

In the stocker of this configuration, the two cranes are provided in the first space constituted by the first space constituent part and are disposed such that each faces a direction opposite to a direction in which the one of the pair of surfaces on which the respective transfer units of the two cranes are provided so as to be capable of being raised and lowered face each other in the traveling direction. With this configuration, the article is transferred to a rack portion interfering with the mast of one crane at one end of the first space (the stocker) in the traveling direction by the other crane, and the article is transferred to a rack portion interfering with the mast of the other crane at the other end of the first space in the traveling direction by the one crane. Consequently, rack portions can also be disposed at the ends of the first space in the travel direction, and the article can be transferred to the rack portions as well. In addition, the first space is provided with the entry area that the two cranes mutually enter, and thus rack portions from which the article can be transferred to only either one of the two cranes will not be constituted. This enables the stocker including the transfer unit provided so as to be capable of being raised and lowered along one of the pair of surfaces of the mast orthogonal to the travel direction to increase the number of articles that can be housed in the stocker.

In the stocker according to one aspect of the present invention, the entry area may be provided at a central portion of the first space in the traveling direction. With this configuration, the traveling areas of the two cranes are distributed substantially equally, and thus the load of the two cranes can be equally divided.

In the stocker according to one aspect of the present invention, the transfer unit may be provided so as to protrude from the one of the pair of surfaces of the mast in the traveling direction. This configuration can make the cranes compact in size in a width direction orthogonal to the travel direction.

In the stocker according to one aspect of the present invention, the first space constituent part may include an opening and closing part through which the cranes are allowed to enter and exit the first space from an end of the first space in the traveling direction, and, the stocker may further include a second space constituent part constituting a second space having at least a size capable of housing both one of the two cranes having exited the first space from the opening and closing part and another of the two cranes a part of the whole of which has exited from the opening and closing part in order to transfer the article to the racks disposed at an end of the first space closer to a side from which the one of the two cranes has exited. This configuration makes it possible to transfer the article to all rack portions housed in the first space constituting part even when the stocker is operated by only one crane.

In the stocker according to one aspect of the present invention, upon confirming that the one of the two cranes is positioned in the second space and that the opening and closing part is closed, the controller may cause the other of the two cranes to travel at a speed being a first speed set as an upper limit in an entire area of the first space. This enables the crane to travel with the first space completely isolated from an operator. Consequently, the safety of the operator can be ensured, and the crane can be caused to travel at higher speeds.

In the stocker according to one aspect of the present invention, upon confirming that the one of the two cranes is positioned in the second space and that the opening and closing part is not closed, the controller may cause the other of the two cranes to travel at a speed being a second speed set as an upper limit lower than the first speed in the entire area of the first space. This enables the crane to travel safely to the operator, although the first space cannot be completely isolated from the operator.

### Advantageous Effects of Invention

One aspect of the present invention can provide a stocker including a crane having a transfer unit provided so as to be raised and lowered along one of the pair surfaces of a mast orthogonal to a traveling direction, the stocker being capable of increasing the number of articles that can be housed in the stocker.

### Brief Description of Drawings

[FIG. 1] FIG. 1 is a schematic configuration diagram illustrating the inside of a stocker according to one embodiment.
[FIG. 2] FIG. 2 shows a sectional view of the stocker in FIG. 1 when viewed from the II-II line.
[FIG. 3] FIG. 3 is a perspective view of a first stacker crane and a second stacker crane in FIG. 1.
[FIG. 4] FIG. 4 is a block diagram illustrating a functional configuration of the stocker.

### Description of Embodiments

The following describes a stocker 1 according to one embodiment with reference to the accompanying drawings. In the description of the drawings, the same components are denoted by the same symbols, and duplicate descriptions are omitted.

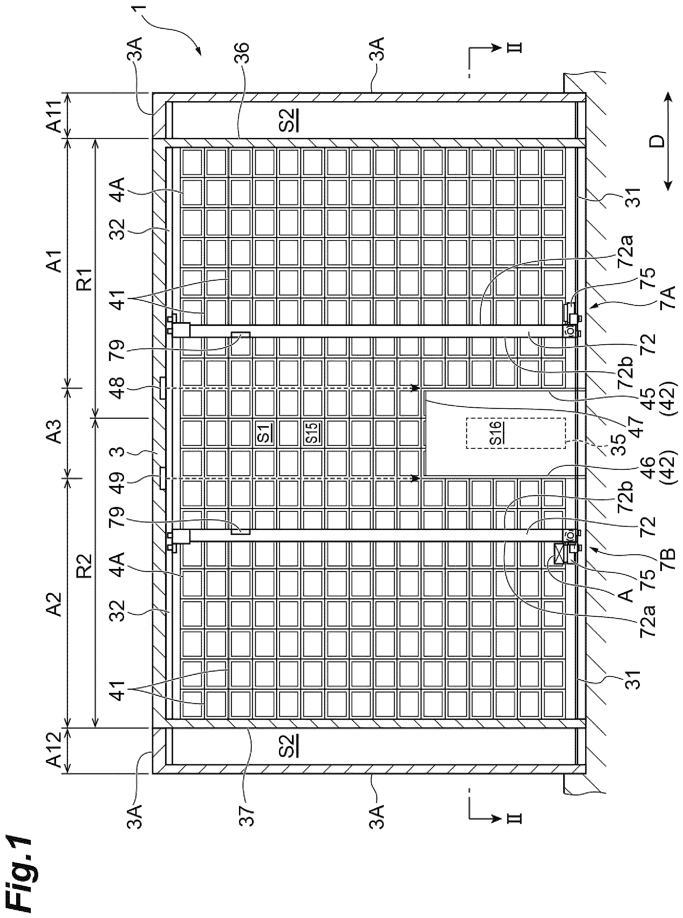

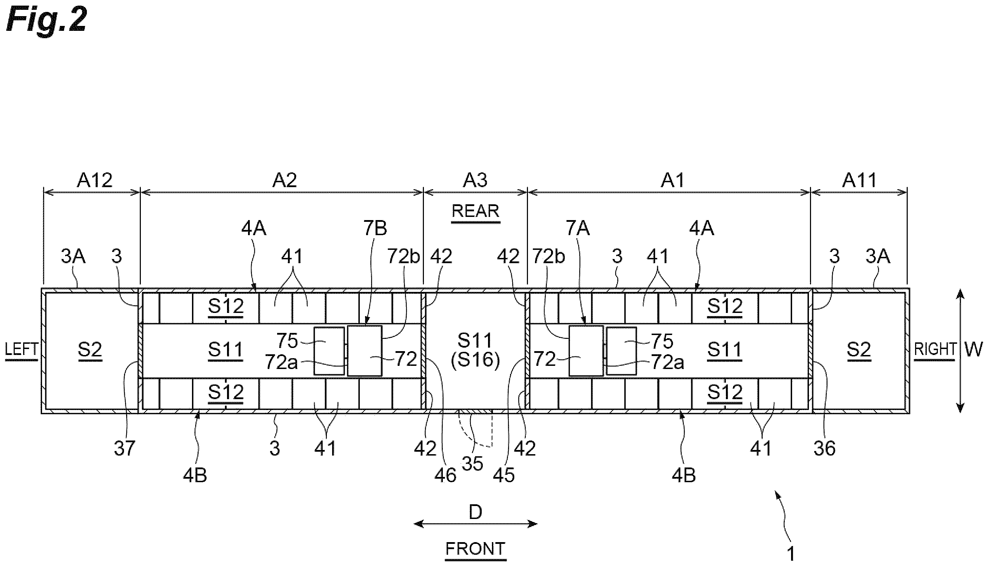

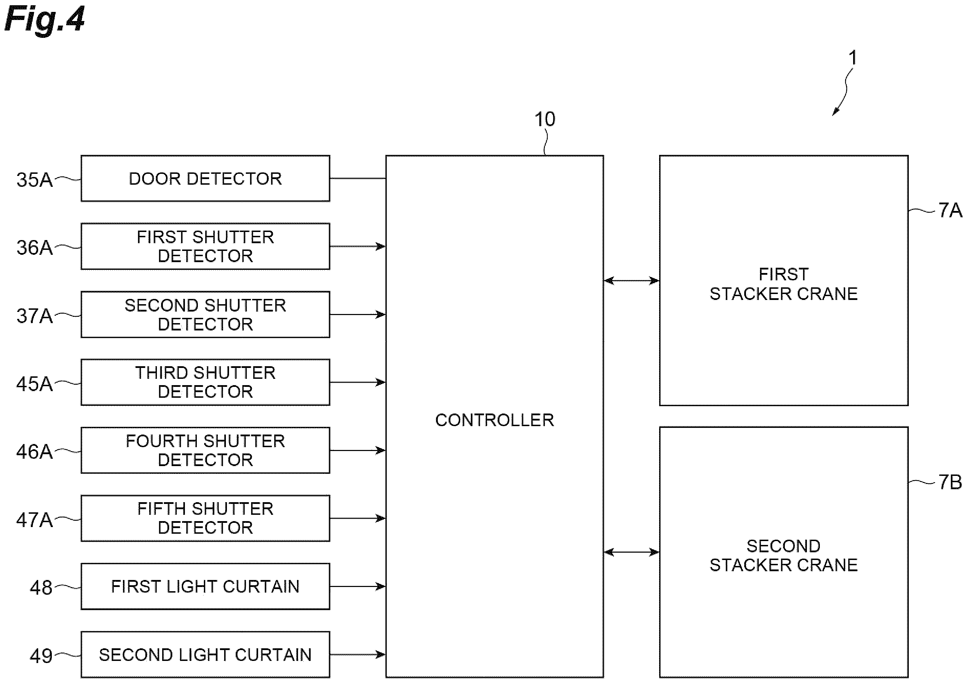

As illustrated in FIG. 1 and FIG. 2, the stocker 1 includes a stocker main body (first space constituting part) 3, a first rack (rack) 4A, a second rack ( rack) 4B, a first stacker crane (crane) 7A, a second stacker crane (crane) 7B, and a controller 10 (refer to FIG. 4). The stocker 1, for example, stores an article A having been transported from the outside of the stocker 1 by a transport apparatus. The article A is, for example, a container such as a front-opening unified pod (FOUP) housing wafers to be processed in semiconductor manufacturing apparatuses or liquid crystal manufacturing apparatuses or a reticle pod housing reticles to be used in semiconductor manufacturing apparatuses or liquid crystal manufacturing apparatuses.

In the following description, as illustrated in FIG. 1 to FIG. 3, the embodiment may be described with a traveling direction D of the first stacker crane 7A and the second stacker crane 7B as a right and left direction, with a width direction W orthogonal to the traveling direction D as a front and rear direction, and with a vertical direction as an up and down direction.

The stocker main body 3 constitutes a first space S1 extending in one direction. The stocker main body 3 includes a frame and a panel, which are not illustrated. The stocker main body 3 constitutes the first space S1 capable of housing part of a traveling rail 31 on which the first stacker crane 7A and the second stacker crane 7B travel, part of an auxiliary rail 32 disposed so as to face the traveling rail 31 in the vertical direction, the two first stacker crane 7A and second stacker crane 7B traveling along the traveling rail 31 and the auxiliary rail 32, and a first rack 4A and a second rack 4B disposed along an extension direction of the traveling rail 31 and the auxiliary rail 32.

The first space S1 constituted by the stocker main body 3 includes a traveling area S11 through which the first stacker crane 7A and the second stacker crane 7B travel and rack areas S12 disposed so as to sandwich the traveling area S11.

At both ends of the stocker main body 3 in the traveling direction D, that is, both right and left ends of the stocker main body 3, stocker reserves (second space constituting parts) 3A, 3A constituting second spaces S2 capable of housing the first stacker crane 7A or the second stacker crane 7B having exited from the first space S1 are disposed. Specifically, the second space S2 is a space surrounded by part of the stocker main body 3 and the stocker reserve 3A. The stocker reserve 3A includes a frame and a panel, which are not illustrated. The second space S2 houses the traveling rail 31 and the auxiliary rail 32 extending from the first space S1. The thus constituted second space S2 on the right side constitutes a first maintenance area A11 in which the first stacker crane 7A is maintained. The second space S2 on the left side constitutes a second maintenance area A12 in which the second stacker crane 7B is maintained.

The stocker main body 3 includes a door 35, a first shutter (an opening and closing part) 36, and a second shutter (the opening and closing part) 37. The door 35 is provided to allow an operator to enter and exit from the first space S1. The door 35 is provided at the center of a front surface of the stocker main body 3 in the right and left direction. The first shutter 36 is provided to allow the first stacker crane 7A to enter and exit from the first space S1 from a right end of the first space S1 in the traveling direction D. The first shutter 36 is provided at a right end of the stocker main body 3. The second shutter 37 is provided to allow the second stacker crane 7B to enter and exit from the first space S1 from a left end of the first space S1 in the traveling direction D. The second shutter 37 is provided at a left end of the stocker main body 3.

The door 35 can switch states between an open state, in which the operator can come and go between the first space S1 and the outside of the first space S1, and a closed state, in which the operator cannot come and go between the first space S1 and the outside of the first space S1. The first shutter 36 can switch states between an open state, in which the first stacker crane 7A can come and go between the first space S1 and the second space S2, and a closed state, in which the first stacker crane 7A cannot come and go between the first space S1 and the second space S2. The second shutter 37 can switch states between an open state, in which the second stacker crane 7B can come and go between the first space S1 and the second space S2, and a closed state, in which the second stacker crane 7B cannot come and go between the first space S1 and the second space S2.

The door 35, the first shutter 36, and the second shutter 37 are provided with a door detector 35A, a first shutter detector 36A, and a second shutter detector 37A, respectively, configured to detect the state of opening and closing. Examples of the door detector 35A, the first shutter detector 36A, and the second shutter detector 37A include contact sensors and optical sensors. As illustrated in FIG. 4, detection results of the state of opening and closing by the door detector 35A, the first shutter detector 36A, and the second shutter detector 37A are acquired by the controller 10.

The second space S2 on the right side has at least a size capable of housing both the first stacker crane 7A having exited out of the first space S1 from the first shutter 36 and the second stacker crane 7B a part of the whole of which has exited from the first shutter 36 in order to transfer the article A to the first rack 4A and the second rack 4B disposed at the right end of the first space S1. Here, in order for the second stacker crane 7B to transfer the article A to the first rack 4A and the second rack 4B disposed at the right end of the first space S1, it is necessary to cause at least a mast 72 to exit from the first shutter 36. This is to align the position of the transfer unit 75 of a second stacker crane 7B with the position of a loading portion (a rack portion) 41 of the first rack 4A and the second rack 4B disposed at the right end of the first space S1. The "part of the whole" referred to above is the second stacker crane 7B in which the mast 72 has exited. Note that the partial portion exiting from the first shutter 36 varies depending on the configuration of the stacker crane.

Like the second space S2 on the right side, the second space S2 on the left side also has at least a size capable of housing both the second stacker crane 7B having exited out of the first space S1 from the second shutter 37 and the first stacker crane 7A a part of the whole of which has exited from the second shutter 37 in order to transfer the article A to the first rack 4A and the second rack 4B disposed at the left end of the first space S1. Note that the partial portion exiting from the second shutter 37 varies depending on the configuration of the stacker crane.

Each of the first rack 4A and the second rack 4B includes a plurality of loading portions 41 each of which is loaded with one article A. The loading portions 41 are arranged in the vertical direction and a horizontal direction. The first rack 4A and the second rack 4B are disposed along the traveling area S11. The first rack 4A and the second rack 4B are disposed such that each face in the width direction orthogonal to the extension direction of the traveling area S11 (the traveling rail 31 and the auxiliary rail 32) and the vertical direction. Each of the first rack 4A and the second rack 4B includes the loading portions 41 in almost all of the first space S1 except for a lower area S16 of an entry area A3, which is described in detail below.

The first stacker crane 7A and the second stacker crane 7B travel through the first space S1 and transport the article A between the loading portions 41 provided in the first space S1 and a check-in and check-out port (not illustrated). More precisely, each of the first stacker crane 7A and the second stacker crane 7B travels along the traveling rail 31 and the auxiliary rail 32 to transport the article A between the loading portions 41 and the check-in and check-out port and to transfer (load and unload) the article A to and from the loading portions 41. The first stacker crane 7A is disposed at the right of the second stacker crane 7B in the extension direction of the traveling rail 31 and the auxiliary rail 32 when viewed from the front in FIG. 1. The second stacker crane 7B is disposed at the left of the first stacker crane 7A in the extension direction of the traveling rail 31 and the auxiliary rail 32 when viewed from the front in FIG. 1.

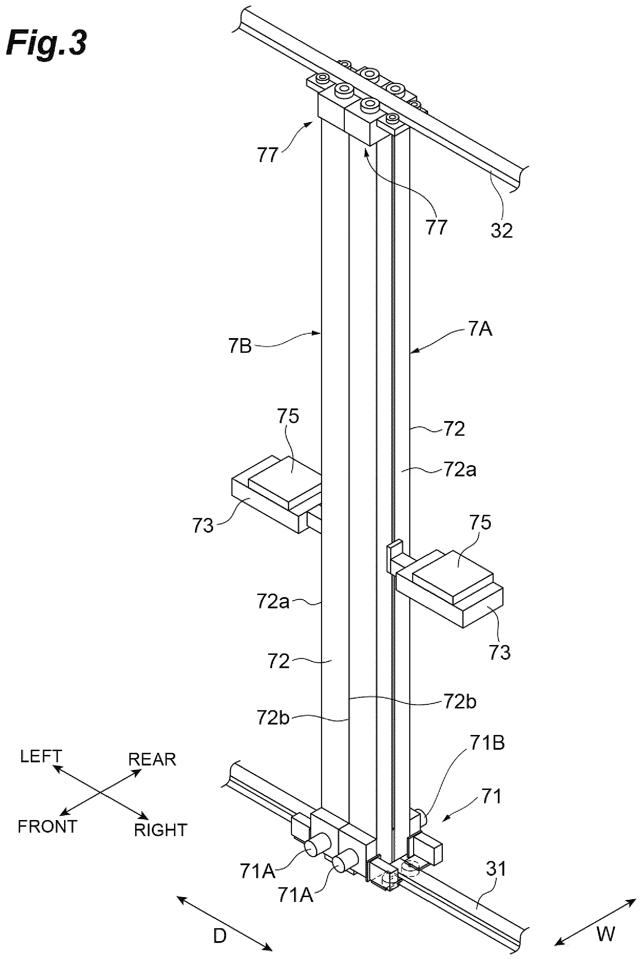

As illustrated in FIG. 3, each of the first stacker crane 7A and the second stacker crane 7B includes a traveling part 71, the mast 72, a lifting platform 73, the transfer unit 75, an auxiliary traveling part 77, and a sensor 79 (refer to FIG. 1). The traveling part 71 mainly includes a motor 71A for traveling and a motor 71B for lifting and lowering. The traveling part 71 travels along the traveling rail 31. The traveling part 71 includes driving wheels for traveling rolling along an upper surface of the traveling rail 31. The motor 71A for traveling is a driving source for the driving wheels for traveling. The motor 71B for lifting and lowering is a driving source for the lifting platform 73.

The mast 72 is erected in the vertical direction at the top of the traveling part 71. The mast 72 has a pair of surfaces (a first surface 72a and a second surface 72b) orthogonal to the traveling direction D of the crane. The first surface 72a of the first stacker crane 7A and the first surface 72a of the second stacker crane 7B are faces on which the lifting platform 73 is provided so as to be capable of being raised and lowered. In other words, the lifting platform 73 (the transfer unit 75) of the first stacker crane 7A is provided so as to be raised and lowered along the first surface 72a, and the lifting platform 73 (the transfer unit 75) of the second stacker crane 7B is also provided so as to be capable of being raised and lowered along the first surface 72a.

The first stacker crane 7A and the second stacker crane 7B are disposed such that each faces a direction opposite to a direction in which the first surfaces 72a, 72a on which the lifting platforms 73 (the transfer units 75) are provided so as to be capable of being raised and lowered face each other in the traveling direction D (so as to face away from each other). The first stacker crane 7A and the second stacker crane 7B are disposed such that the second surfaces 72b, 72b face each other.

The transfer unit 75 is provided on the lifting platform 73. More specifically, the transfer unit 75 is provided so as to protrude from the first surface 72a in the traveling direction D and is provided so as to be capable of being raised and lowered along the first surface 72a by the lifting platform 73. The transfer unit 75 transfers the article A to and from the loading portions 41 of the first rack 4A and the second rack 4B and also transfers the article A to and from the check-in and check-out port. The auxiliary traveling part 77 travels along the auxiliary rail 32. The auxiliary traveling part 77 includes a pair of driving wheels rolling with the auxiliary rail 32 interposed therebetween.

The sensor 79 is a sensor configured to detect the position of an object. The sensor 79 of the first stacker crane 7A is provided on the second surface 72b and measures a distance to the second surface 72b of the second stacker crane 7B opposite in the traveling direction D. The sensor 79 of the second stacker crane 7B is provided on the second surface 72b and measures a distance to the second surface 72b of the first stacker crane 7A opposite in the traveling direction D. Measurement results of the sensors 79, 79 are acquired by the controller 10 (refer to FIG. 4). The measurement by the sensors 79, 79 may be executed constantly or executed at certain time intervals.

The first stacker crane 7A and the second stacker crane 7B may be provided with a shock absorber, for example, on the second surface 72b of at least one of the first stacker crane 7A and the second stacker crane 7B. This can prevent the whole or part of the first stacker crane 7A and the second stacker crane 7B from being damaged even if the first stacker crane 7A and the second stacker crane 7B collide with each other.

For the first stacker crane 7A and the second stacker crane 7B, areas in which traveling through the first space S1 is allowed in a normal mode are set in advance. Specifically, for the first stacker crane 7A, a first traveling area A1 is set so that the article A can be transferred to and from the loading portions 41 disposed in a range R1 illustrated in FIG. 1. For the second stacker crane 7B, a second traveling area A2 is set so that the article A can be transferred to and from the loading portions 41 disposed in a range R2 illustrated in FIG. 1. In the first space S1 in which the first traveling area A1 and the second traveling area A2 are set, the entry area A3 that the two first stacker crane 7A and second stacker crane 7B mutually enter is set. In the stocker 1 according to the present embodiment, the entry area A3 is provided at a central portion of the first space S1 in the travel direction D.

The controller 10 illustrated in FIG. 4 is an electronic control unit including a central processing unit (CPU), a read only memory (ROM), a random access memory (RAM), and the like. The controller 10 controls various operations of the first stacker crane 7A and the second stacker crane 7B included in the stocker 1. The controller 10 can be configured as software, for example, in which a computer program stored in the ROM is loaded onto the RAM and executed by the CPU. The controller 10 may be configured as hardware including electronic circuitry or the like. The controller 10 executes various control described below through the cooperation of the hardware such as the CPU, the RAM and the ROM and the software such as the computer program.

The controller 10 is provided so as to be able to switch among the normal mode, in which both the first stacker crane 7A and the second stacker crane 7B are operated, a first separation mode, in which the operation of one of the first stacker crane 7A and the second stacker crane 7B is stopped in the first space S1, and a second separation mode, in which the operation of one of the first stacker crane 7A and the second stacker crane 7B is stopped in the second space S2. The switching among the modes can be switched by the operator by means of an operating unit or the like, not illustrated.

In the normal mode, the controller 10 controls the traveling of the first stacker crane 7A such that the first stacker crane 7A travels only through the first traveling area A1 and the entry area A3 (the first stacker crane 7A does not advance into the second traveling area A2) and controls the traveling of the second stacker crane 7B such that the second stacker crane 7B travels only through the second traveling area A2 and the entry area A3 (the second stacker crane 7B does not advance into the first traveling area A1). In addition, the controller 10 controls the traveling of the first stacker crane 7A and the second stacker crane 7B such that the first stacker crane 7A and the second stacker crane 7B do not collide with each other.

Specifically, the controller 10 performs control so that the distance between the two first stacker crane 7A and second stacker crane 7B does not become smaller than a certain distance, based on a detection result of the sensor 79 of the first stacker crane 7A and a detection result of the sensor 79 of the second stacker crane 7B. Specifically, when a distance value of at least one of the detection result of the sensor 79 of the first stacker crane 7A and the detection result of the sensor 79 of the second stacker crane 7B falls below a threshold distance that is larger than the above certain distance by a certain value, the controller 10 outputs an expelling command to one of the two first stacker crane 7A and second stacker crane 7B. This makes the two first stacker crane 7A and second stacker crane 7B always separated from each other by the certain distance or more and can thus prevent the two first stacker crane 7A and second stacker crane 7B from colliding with each other.

The inside of the stocker main body 3 (the first space Sl) is provided with a third shutter 45, a fourth shutter 46, a fifth shutter 47, a first light curtain 48, and a second light curtain 49.

The third shutter 45 can switch states in the first space S1 between an open state in which the first stacker crane 7A can come and go between the first traveling area A1 and the entry area A3, and a closed state in which the first stacker crane 7A cannot come and go between the first traveling area A1 and the entry area A3. The third shutter 45 may be provided in an openable and closable manner by a door structure or provided in an openable and closable manner by a removable structure. The third shutter 45 is provided at a boundary portion between the traveling area S11 of the first traveling area A1 and the lower area S16 of the entry area A3. The third shutter 45 is provided with a third shutter detector 45A configured to detect the presence or absence of opening and closing. The third shutter detector 45A is, for example, a contact sensor, an optical sensor, or the like. A detection result of opening and closing by the third shutter detector 45A is acquired by the controller 10.

The fourth shutter 46 can switch states in the first space S1 between an open state in which the second stacker crane 7B can come and go between the second traveling area A2 and the entry area A3, and a closed state in which the second stacker crane 7B cannot come and go between the second traveling area A2 and the entry area A3. The fourth shutter 46 may be provided in an openable and closable manner by a door structure or provided in an openable and closable manner by a removable structure. The fourth shutter 46 is provided at a boundary portion between the traveling area S11 of the second traveling area A2 and the lower area S16 of the entry area A3. The fourth shutter 46 is provided with a fourth shutter detector 46A configured to detect the presence or absence of opening and closing. The fourth shutter detector 46A is, for example, a contact sensor, an optical sensor, or the like. A detection result of opening and closing by the fourth shutter detector 46A is acquired by the controller 10.

The fifth shutter 47 can switch states in the entry area A3 of the first space S1 between an open state in which the operator can come and go between the lower area S16 and an upper area S15 provided above the lower area S16, and a closed state in which the operator cannot come and go between the lower area S16 and the upper area S15. The fifth shutter 47 may be provided in an openable and closable manner by a door structure or provided in an openable and closable manner by a removable structure. The fifth shutter 47 is provided at a boundary portion between the lower area S16 and the upper area S15. The fifth shutter 47 is provided with a fifth shutter detector 47A configured to detect the presence or absence of opening and closing. The fifth shutter detector 47A is, for example, a contact sensor, an optical sensor, or the like. A detection result of opening and closing by the fifth shutter detector 47A is acquired by the controller 10.

Dividing plates 42 are provided at boundary portions between the rack areas S12 of the first traveling area A1 and the lower area S16 of the entry area A3. In such a configuration provided with the third shutter 45, the fourth shutter 46, the fifth shutter 47, and the dividing plates 42, when the third shutter 45, the fourth shutter 46, and the fifth shutter 47 become the closed state, the lower area S16 of the entry area A3 becomes a closed space surrounded by the third shutter 45, the fourth shutter 46, the fifth shutter 47, and the dividing plates 42.

The first light curtain 48 detects whether an object is present at a boundary portion between the traveling area S11 of the first traveling area A1 and the upper area S15 of the entry area A3. The first light curtain 48 includes a light emitter and a light receiver. The first light curtain 48 detects the presence or absence of an object by whether the light emitted from the light emitter is detected in the light receiver. A detection result of the presence or absence of an object by the first light curtain 48 is acquired by the controller 10.

The second light curtain 49 detects whether an object is present at a boundary portion between the traveling area S11 of the second traveling area A2 and the upper area S15 of the entry area A3. The configuration of the second light curtain 49 is the same as that of the first light curtain 48. A detection result of the presence or absence of an object by the second light curtain 49 is acquired by the controller 10.

The controller 10 controls the traveling of the first stacker crane 7A such that, in the first separation mode in which the second stacker crane 7B does not operate in the second traveling area A2 of the first space S1, the first stacker crane 7A travels only through the first traveling area A1 and the entry area A3 (the first stacker crane 7A does not advance into the second traveling area A2). The controller 10 causes the first stacker crane 7A to travel, provided that the third shutter detector 45A and the fifth shutter detector 47A detect being the closed state and that the first light curtain 48 and the second light curtain 49 do not detect any object. In other words, while the first stacker crane 7A is traveling, when the third shutter detector 45A detects the open state, when the fifth shutter detector 47A detects the open state, when the first light curtain 48 detects an object, or when the second light curtain 49 detects an object, the controller 10 stops (urgently stops) the traveling of the first stacker crane 7A.

With such a configuration of the third shutter 45 and the fifth shutter 47, the operator can operate the first stacker crane 7A only in a state where all entry routes are blocked from the lower area S16 of the entry area A3 to the first traveling area A1 in which the first stacker crane 7A operates, and thus the safety of the operator is ensured. In addition, with such a configuration of the second light curtain 49, when the operator is about to enter the first traveling area A1 from the second traveling area A2 via the upper area S15 of the entry area A3, the traveling of the first stacker crane 7A is stopped, and thus the safety of the operator is ensured.

The controller 10 controls the traveling of the second stacker crane 7B such that, in the first separation mode in which the first stacker crane 7A does not operate in the first traveling area A1 of the first space S1, the second stacker crane 7B travels only through the second traveling area A2 and the entry area A3 (such that it does not advance into the first traveling area A1). The controller 10 causes the second stacker crane 7B to travel, provided that the fourth shutter detector 46A and the fifth shutter detector 47A detect being the closed state and that the first light curtain 48 and the second light curtain 49 do not detect any object. In other words, while the second stacker crane 7B is traveling, the controller 10 stops (urgently stops) the traveling of the second stacker crane 7B when the fourth shutter detector 46A detects the open state, when the fifth shutter detector 47A detects the open state, when the first light curtain 48 detects an object, or when the second light curtain 49 detects an object.

With such a configuration of the fourth shutter 46 and the fifth shutter 47, the operator can operate the second stacker crane 7B only in a state where all entry routes are blocked from the lower area S16 of the entry area A3 to the second traveling area A2 in which the second stacker crane 7B operates, and thus the safety of the operator is ensured. In addition, with such a configuration of the first light curtain 48, when the operator is about to enter the second traveling area A2 from the first traveling area A1 via the upper area S15 of the entry area A3, the traveling of the second stacker crane 7B is stopped, and thus the safety of the operator is ensured.

The controller 10 performs control such that the first stacker crane 7A travels through the entire area in the first space S1 in the second separation mode in which the operation of the second stacker crane 7B is stopped in the second space S2. That is, the controller 10 performs control such that the first stacker crane 7A travels through the first traveling area A1, the entry area A3, and the second traveling area A2.

When the second stacker crane 7B is positioned in the second space S2 on the left side and the second shutter detector 37A detects the closed state, the controller 10 causes the first stacker crane 7A to travel at a speed the upper limit of which is a first speed. The first speed is, for example, an upper speed limit of the first stacker crane 7A and the second stacker crane 7B in the normal mode. Such control enables the first stacker crane 7A to travel with the first space S1 completely isolated from the operator. Consequently, the safety of the operator can be ensured.

When the second stacker crane 7B is positioned in the second space S2 and the second shutter detector 37A detects the open state, the controller 10 causes the first stacker crane 7A to travel at a speed the upper limit of which is a second speed that is lower than the first speed. This enables the first stacker crane 7A to travel safely to the operator, although the first space S1 cannot be completely isolated from the operator.

The controller 10 performs control such that the second stacker crane 7B travels through the entire area in the first space S1 in the second separation mode in which the operation of the first stacker crane 7A is stopped in the second space S2. That is, the controller 10 performs control such that the second stacker crane 7B travels through the first traveling area A1, the entry area A3, and the second traveling area A2.

When the first stacker crane 7A is positioned in the second space S2 on the right side and the first shutter detector 36A detects the closed state, the controller 10 causes the second stacker crane 7B to travel at a speed the upper limit of which is the first speed. Such control enables the first stacker crane 7A to travel with the first space S1 completely isolated from the operator. Consequently, the safety of the operator can be ensured.

When the first stacker crane 7A is positioned in the second space S2 and the first shutter detector 36A detects the open state, the controller 10 causes the second stacker crane 7B to travel at a speed the upper limit of which is the second speed. This enables the second stacker crane 7B to travel safely to the operator, although the first space S1 cannot be completely isolated from the operator.

The following describes a working effect of the stocker 1 according to the above embodiment. In the stocker 1 according to the above embodiment, the two first stacker crane 7A and second stacker crane 7B are provided in the first space S1 constituted by the stocker main body 3 and are disposed such that each faces a direction opposite to a direction in which the first surfaces 72a on which the transfer units 75 are provided so as to be capable of being raised and lowered face each other in the traveling direction D. With this configuration, the article A is transferred to the loading portions 41 of the first rack 4A and the second rack 4B interfering with the mast 72 of the second stacker crane 7B at the right end of the first space S1 in the traveling direction D by the first stacker crane 7A, and the article A is transferred to the loading portions 41 of the first rack 4A and the second rack 4B interfering with the mast 72 of the first stacker crane 7A at the left end of the first space S1 in the traveling direction D by the second stacker crane 7B. Consequently, the loading portions 41 of the first rack 4A and the second rack 4B can also be disposed at the ends of the first space S1 in the traveling direction D, and the article A can be transferred to the loading portions 41 as well.

In addition, the first space S1 is provided with the entry area A3 that the first stacker crane 7A and the second stacker crane 7B mutually enter, and thus the loading portions 41 of the first rack 4A and the second rack 4B will not be constituted from which the article A can be transferred to only either one of the first stacker crane 7A and the second stacker crane 7B. This enables the stocker 1 including the crane having the transfer unit 75 provided so as to be capable of being raised and lowered along the first surface 72a of the mast 72 orthogonal to the travel direction D to increase the number of articles A that can be stored in the stocker 1.

The embodiment has been described above, but one aspect of the present invention is not limited to the above embodiment. Various modifications can be made within a scope not departing from the gist of the invention.

In the stocker 1 according to the above embodiment, an example has been described in which the controller 10 can switch among the three modes, or the normal mode, the first separation mode, and the second separation mode, but control having only the normal mode, control switching between the normal mode and the first separation mode, and control switching between the normal mode and the second separation mode may be executed.

In the stocker 1 according to the above embodiment and modification, an example has been described in which the stocker reserve 3A constituting the second space S2 is provided at both ends of the stocker 1, but the stocker reserve 3A may be disposed only at either of them or need not be disposed at either of them. Only the rail may be drawn out of the first space S1, and the stocker reserve 3A housing the first stacker crane 7A or the second stacker crane 7B positioned on the drawn rail need not be provided.

In the stocker 1 according to the above embodiment and modification, an example in which only one stocker 1 is disposed has been described, but stockers 1 may be arranged via the second space S2 (the first maintenance area A11 or the second maintenance area A12) in the traveling direction D. In this case, the second space S2 interposed between the stockers 1 is shared by the two stockers 1 and is used as a maintenance area for the stacker cranes.

### Reference Signs List

- 1: stocker
- 3: stocker main body (first space constituting part)
- 3A: stocker reserve (second space constituting part)
- 4A: first rack (rack)
- 4B: second rack (rack)
- 7A: first stacker crane (crane)
- 7B: second stacker crane (crane)
- 10: controller
- 31: traveling rail (rail)
- 36: first shutter (opening and closing part)
- 37: second shutter (opening and closing part)
- 41: loading portion (rack portion)
- 72: mast
- 72a: first surface (one of a pair of surfaces)
- 72b: second surface
- 73: lifting platform
- 75: transfer unit
- A: article
- A1: first traveling area
- A2: second traveling area
- A3: entry area
- D: traveling direction
- S1: first space
- S2: second space

## Claims

1. A stocker comprising:
two cranes configured to travel on a rail extending in one direction;
racks being disposed so as to extend along and sandwich the rail, an article being placed in and removed from the racks by the two cranes;
a first space constituent part constituting a first space housing the two cranes and the racks; and
a controller configured to control the two cranes,
each of the two cranes including a mast having a pair of surfaces orthogonal to a traveling direction of the two cranes and a transfer unit provided so as to be capable of being raised and lowered along one of the pair of surfaces and configured to transfer the article to and from the racks,
the two cranes being disposed such that each faces a direction opposite to a direction in which the one of the pair of surfaces on which the transfer unit is provided so as to be capable of being raised and lowered face each other in the traveling direction,
the first space being provided with an entry area that the two cranes mutually enter, and
the controller controlling traveling of the two cranes such that the two cranes do not collide with each other.

2. The stocker according to claim 1, wherein the entry area is provided at a central portion of the first space in the traveling direction.

3. The stocker according to claim 1 or 2, wherein the transfer unit is provided so as to protrude from the one of the pair of surfaces of the mast in the traveling direction.

4. The stocker according to claim 1 or 2, wherein
the first space constituent part includes an opening and closing part through which the cranes are allowed to enter and exit the first space from an end of the first space in the traveling direction, and
the stocker further comprises a second space constituent part constituting a second space having at least a size capable of housing both one of the two cranes having exited the first space from the opening and closing part and another of the two cranes a part of the whole of which has exited from the opening and closing part in order to transfer the article to the racks disposed at an end of the first space closer to a side from which the one of the two cranes has exited.

5. The stocker according to claim 4, wherein upon confirming that the one of the two cranes is positioned in the second space and that the opening and closing part is closed, the controller causes the other of the two cranes to travel at a speed being a first speed set as an upper limit in an entire area of the first space.

6. The stocker according to claim 5, wherein upon confirming that the one of the two cranes is positioned in the second space and that the opening and closing part is not closed, the controller causes the other of the two cranes to travel at a speed being a second speed set as an upper limit lower than the first speed in the entire area of the first space.
